# EUROPEAN PATENT APPLICATION

(11) **EP 2 138 433 A1**
(43) Date of publication of application: **30.12.2009**
(21) Application number: 08460027.9
(22) Date of filing: 27.06.2008
(51) Int. Cl.: B65G 39/04

(54) **Roller and a method of its manufacture**

(71) Applicant: LINTER Spólka z o.o., 32-340 Wolbrom (PL)
(72) Inventor: Habryn, Andrzej, Os.Lokietka 9/16 (PL)
(74) Representative: Karczmitowicz, Teresa Ewa

(57) **Abstract**

A roller consists of two axially symmetrical, monolithic half-shells (1), with tubular segment (2) opened at one end (3), and with a base (5), or a hub, at opposite end. The joint is made circumferentially at open ends (3), or edges, of tubular segments (2). Two half-shells (1) are joined together directly or to opposite ends of an intermediate tubular member (4). In preferred embodiment the half-shells (1) and the intermediate tubular member (4) have the same external diameter, however convex, concave, conical or stepped surfaces of the shell are also covered by the invention. Each half-shell (1) has a base (5) shaped with generally cylindrical cavity (6) forming a mounting (7) for a bearing housing. The base can be shaped with circular orifice (8) forming a seat for a shaft or an axle, or a stub, instead. Both solutions may be applied in the same hub or roller. Preferably the roller is applied in a roller conveyor, or in a belt conveyor, it is a pulley or an idle roller. The joints at open ends (3) in all embodiments are catch joints, or they are made by welding, clamping, gluing or screwing, with clips or pins, or through thermocompression bonding. The half-shells (1) are die-stamped, moulded, cast, forged, pulled, or injection moulded, and are made from steel, aluminium, alloys, or plastic. Preferred methods of manufacture of any above roller consist in that the half-shells (1) are made from steel, aluminium, alloys, or plastic, by die-stamping moulding, casting, forging, pulling, or injection moulding, and the joints at circumference of open ends (3) of tubular segments (2) of two half-shells are made directly or at opposite ends of an intermediate tubular member (4), and the joints at open ends are catch joints, or they are made by welding, clamping, gluing, screwing, with clips or pins, or through thermocompression bonding.

## Description

The invention refers to a roller used in various appliances, and to a method of its manufacture. In particular the invention refers to the roller for the roller conveyors and the belt conveyors. According to the invention the roller used in the conveyors is an idle roller or a driving roller, a driving pulley included. The invention refers also to the appliances where a roller may be used for any other purpose, like e.g. the roller-wheels, lawn rollers, road rollers, and the like.

Various rollers are known in the state of the art. In the conveyors technology the roller consists usually of cylindrical tube, or shell, closed at both ends with hubs for bearings or for shafts, axles or stubs. The hubs are screwed or welded with the shell. Typical rollers are commercially available from e.g. MIFAMA-ROLL, PIOMA, TRANSA, SANDVIK, T-REX Rubber, and others. In most of embodiments cylindrical shell is combined with a hub which houses internal bearing cooperating with external axle or shaft (WO02074665, GB2200719), or internal axle, stub or shaft, cooperating with external bearing (WO2008060176, RU2291095, GB1221520), or both the bearing and the shaft (US2008078648, EP0897882, US5383549, US5372230), or the bearing and a pair of stubs (WO02074665). The shaft itself may be monolithic (US2008078648, GB 1221520, US5372230) or hollow (RU2224704), or combination of monolithic axle inside hollow envelope (RU2224705).

In Polish patent PL170870 the roller shell consists of two half-shells pressed against central ring by two special nuts screwed on central shaft. Each nut acts directly on inner race of the bearing with axial force which is transmitted by the bearing to its outer race mounted in a hub. The hub is combined with the half-shell, and in consequence the half-shells are pressed against central ring.

In another Polish patent PL189397 the roller shell consists of two cylindrical half-shells, one with male open end (key) and the other with female open end (spline), shaped at circumferencial edges of both cylinders. Two half-shells are combined by inserting male key into female splined seat and they are fastened by two special nuts screwed on opposite ends of the shaft. The shaft has greater internal and lower external diameters, which secures the half shells from uncoupling.

The rollers according to the above patents PL170870 and PL189397 rotate against fixed shaft which also secures two half-shells from uncoupling. Therefore the shaft is indispensable in both solutions and is fixed, which limits remarkably the number of applications of these rollers. There is no hint in these patent documents that the half-shells may be coupled circumferencially by any means providing permanent joint.

In all rollers described above the problems of unbalance and limited repeatability of production, and insufficient coaxiality of the bearing or shaft mountings persist. The dimensional (linear, angular) and measurement errors contribute to these problems. Also the costs of production are relatively high due to big number of operations and significant risk of unacceptable dimensional deviations. The technical problem solved by this invention is to simplify both the roller and the method of its manufacture, aiming to overcome the above problems and to reduce the costs of manufacture.

A roller according to the invention consists of two half-shells and optionally an intermediate tubular member, separating the half-shells along the axis of rotation. Both half shells and the intermediate tubular member are rotationally symmetrical. What characterises the roller is that each axially symmetrical half-shell is a monolithic element consisting of two functional segments: tubular segment which is opened at one end, and which is closed by a disc-shaped "bottom", or base, at opposite end. The open ends, or edges, of the tubular segments of two half-shells are joined at circumference. Both half-shells taken to manufacture the roller may be identical, however the embodiments with different half-shells are covered by this invention as well. The example is the roller with driving axle or sprocket wheel at one side, and a bearing at opposite side.

In preferred embodiment the open ends of tubular segments of the two half-shells are joined together directly. With this kind of joint one can make the roller from two half-shells.

In another embodiment the open ends of tubular segments of two half-shells are joined to opposite ends of the intermediate tubular member. The difference is in that the roller of any length may be manufactured by simple joining two standard half-shells with the intermediate tubular member of a length answering the users needs.

Generally, circumferential surface of the roller may have any rotationally symmetrical shape: cylindrical (curvature of outer surface equal to null), convex (positive curvature - barrell-type roll), concave (negative curvature - grooved roll), conical shaped with positive, negative or null curvature, stepped, etc. In other words, the pitch-surface generator is parallel or convergent to the axis, or concave, or convex, or stepped. In mostly preferred embodiment the half-shells and the intermediate member have the same external diameter, which means that the rollers outer surface is cylindrical.

In the roller according to the invention each half-shell has a base which is a hub shaped with generally cylindrical cavity forming a mounting for a bearing housing. In another embodiment the base is shaped with axial, circular orifice forming a seat for a shaft or an axle, or a stub. Both solutions may be combined in one embodiment, resulting in a hub with cylindrical cavity serving for the bearing mounting, and axial orifice for the shaft.

The roller described above is preferably applied in a roller conveyor or in a belt conveyor. The roller may be a driving roller, or pulley, as well as an idle roller.

The joints at open ends of tubular segments of the half-shells can be made in many ways. Preferably the joints are catch joints, or they are made by welding, clamping, gluing, screwing, with clips or pins, or through thermocompression bonding.

Also the half-shells can be made in many ways, according to the materials and particular function of the roller. Preferably the half-shells are die-stamped, moulded, cast, forged, pulled, or injection moulded. The material is preferably steel, aluminium, alloys, or plastic.

According to the invention a method of manufacture of any above roller is characterised in that the half-shells are made from steel, aluminium, alloys, or plastic, by die-stamping, moulding, casting, forging, pulling, or injection moulding, and the joints at circumference of open ends of tubular segments of two half-shells are made directly or at opposite ends of an intermediate tubular member, and the joints at open ends are catch joints, or are made by welding, clamping, gluing, screwing, with clips or pins, or through thermocompression bonding.

Preferred embodiments of the roller according to the invention are schematically shown on the drawing, where Fig. 1 shows the half-shell, Fig. 2 shows the roller formed by joining two half-shells by their open edges, and Fig. 3 shows the roller formed by joining two half-shells with the intermediate tubular member in between.

In one embodiment the roller consists of two half-shells (1). Each half-shell (1) is an axially symmetrical, monolithic element with tubular segment (2) opened at one end (3), and with a base (5), or a hub, at opposite end. Two half-shells (1) are joined together directly. The joint is made circumferentially at open ends (3), or edges, of tubular segments (2).

In another embodiment optional, intermediate tubular member (4) is placed between the half-shells (1), so that the open ends (3) of tubular segments (2) of two half-shells are joined to opposite ends of the intermediate tubular member (4).

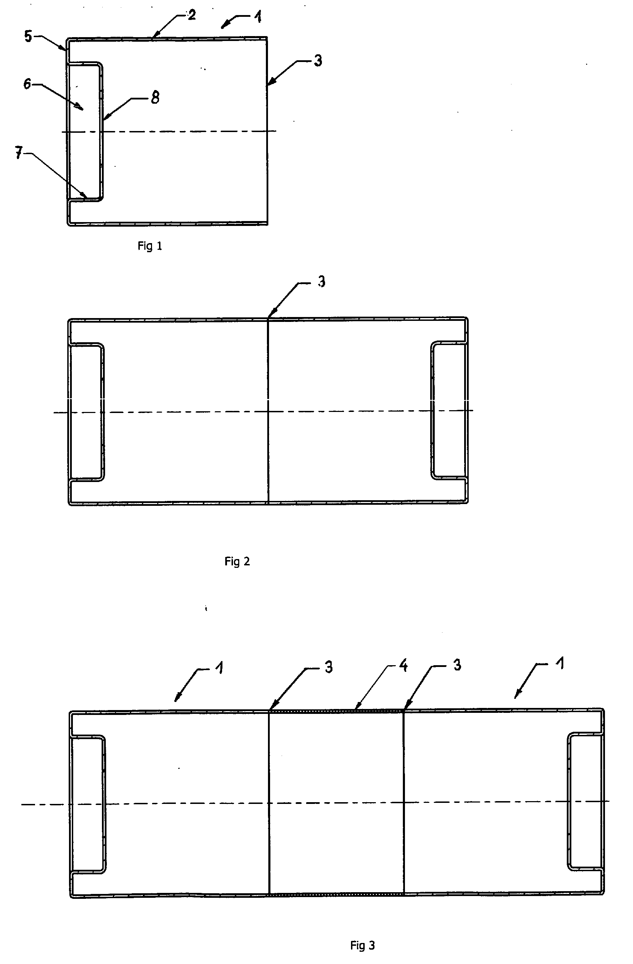

In preferred embodiments shown in Fig. 2 and 3, the half-shells (1) and the intermediate tubular member (4) have the same external diameter. The working surface of the roller is cylindrical then, which is very common in rollers for conveyors. However convex, concave, conical or stepped surfaces of the shell are also covered by the embodiments of the invention.

In all embodiments each half-shell (1) has a base (5) shaped with generally cylindrical cavity forming a mounting (6) for a bearing housing. The base can be shaped with circular orifice forming a seat for a shaft or an axle, or a stub, instead. Both solutions may be applied in the same hub or in one roller, e.g. with a bearing at one side and an axle at the other side.

In preferred embodiments the roller is applied in a roller conveyor, or in a belt conveyor. The roller may be a driving roller, or pulley, as well as an idle roller.

The joints at open ends (3) in all above mentioned embodiments are catch joints, or they are made by welding, clamping, gluing or screwing, with clips or pins, or through thermocompression bonding.

The half-shells (1) are die-stamped, moulded, cast, forged, pulled, or injection moulded, and are made from steel, aluminium, alloys, or plastic.

Preferred methods of manufacture of any above roller consist in that the half-shells (1) are made from steel, aluminium, alloys, or plastic, by die-stamping moulding, casting, forging, pulling, or injection moulding, and the joints at circumference of open ends (3) of tubular segments (2) of two half-shells are made directly or at opposite ends of an intermediate tubular member (4), and the joints at open ends are catch joints, or they are made by welding, clamping, gluing, screwing, with clips or pins, or through thermocompression bonding.

## Claims

1. A roller consisting of two half-shells and optionally an intermediate member **characterised in that** each half-shell (1) is an axially symmetrical monolithic element with tubular segment (2) opened at one end (3) and with the joint made circumferentially at open ends (3) of tubular segments (2).

2. The roller according to claim 1 **characterised in that** open ends (3) of tubular segments (2) of two half-shells are joined together directly.

3. The roller according to claim 1 **characterised in that** open ends (3) of tubular segments (2) of two half-shells are joined to opposite ends of an intermediate tubular member (4).

4. The roller according to any of preceding claims **characterised in that** the pitch-surface generator is parallel to the axis, or convergent, or concave, or convex, or stepped.

5. The roller according to claim 3 **characterised in that** the half-shells (1) and the intermediate tubular member (4) have the same external diameter.

6. The roller according to any of preceding claims **characterised in that** each half-shell (1) has a base (5) shaped with generally cylindrical cavity (6) forming a mounting (7) for a bearing housing.

7. The roller according to any of preceding claims **characterised in that** each half-shell (1) has a base (5) shaped with circular orifice (8) forming a seat for a shaft or an axle, or a stub.

8. The roller according to any of claims 1-7 **characterised in that** it is applied in a roller conveyor or in a belt conveyor.

9. The roller according to any of claims 1-8 **characterised in that** the joints at open ends (3) are made by welding or clamping, or through thermocompression bonding.

10. The roller according to any of claims 1-8 **characterised in that** the joints at open ends (3) are made by gluing or screwing.

11. The roller according to any of claims 1-8 **characterised in that** the joints at open ends (3) are made with clips or pins or are catch joints.

12. The roller according to any of preceding claims **characterised in that** the half-shells (1) are die-stamped or moulded.

13. The roller according to any of preceding claims **characterised in that** the half-shells (1) are cast or forged, or pulled, or injection moulded.

14. The roller according to any of preceding claims **characterised in that** the half-shells (1) are made from steel, or aluminium, or alloys, or plastic.

15. A method of manufacture of the roller according to any of claims 1-14 **characterised in that** the half-shells (1) are made from steel, aluminium, alloys, or plastic, by die-stamping, moulding, casting, forging, pulling, or injection moulding, and the joints at circumference of open ends (3) of tubular segments (2) of two half-shells are made directly or at opposite ends of an intermediate tubular member (4), and the joints at open ends are catch joints or they are made by welding, clamping, gluing, screwing, with clips or pins, or through thermocompression bonding.

## Amended claims

### Amended claims in accordance with Rule 137(2) EPC.

**1.** A roller consisting of two half-shells and optionally an intermediate member where each half-shell (1) is an axially symmetrical monolithic element with a tubular segment (2) with an opened end (3) and with the joint made circumferentially along the open ends (3) of the tubular segments (2) **characterised in that** the thickness off the roller walls is uniform and the roller corners between cylindrical and planar surfaces are rounded.

**2.** The roller according to claim 1 **characterised in that** the open ends (3) of the tubular segments (2) of two half-shells (1) are fastened together directly.

**3.** The roller according to claim 1 **characterised in that** the open ends (3) of the tubular segments (2) of two half-shells (1) are fastened to opposite ends of an intermediate tubular member (4).

**4.** The roller according to any of preceding claims **characterised in that** the pitch-surface generator is parallel to the roller axis, or convergent, or concave, or convex, or stepped.

**5.** The roller according to claim 3 **characterised in that** the half-shells (1) and the intermediate tubular member (4) have the same external diameter.

**6.** The roller according to any of preceding claims **characterised in that** each half-shell (1) has a base (5) shaped with a generally cylindrical cavity (6) forming a mounting (7) for a bearing housing.

**7.** The roller according to any of preceding claims **characterised in that** each half-shell (1) has a base (5) shaped with a circular orifice (8) forming a seat for a shaft or an axle, or a stub.

**8.** The roller according to any of preceding claims **characterised in that** it is applied in a roller conveyor or in a belt conveyor.

**9.** The roller according to any of claims 1-8 **characterised in that** the joints at the open ends (3) are made by welding or clamping, or through thermocompression bonding.

**10.** The roller according to any of claims 1-8 **characterised in that** the joints at the open ends (3) are made by gluing or screwing.

**11.** The roller according to any of claims 1-8 **characterised in that** the joints at the open ends (3) are made with clips or pins or they are the catch joints.

**12.** The roller according to any of preceding claims **characterised in that** the half-shells (1) are die-stamped or moulded.

**13.** The roller according to any of preceding claims **characterised in that** the half-shells (1) are cast or forged, or pulled, or injection moulded.

**14.** The roller according to any of preceding claims **characterised in that** the half-shells (1) are made from steel, or aluminium, or alloys, or plastic.

**15.** A method of manufacture of the roller according to any of claims 1-14 **characterised in that** the half-shells (1) are made from steel, aluminium, alloys, or plastic, by die-stamping, moulding, casting, forging, pulling, or injection moulding, and the joints along circumference of the open ends (3) of the tubular segments (2) of two half-shells are made directly or at opposite ends of an intermediate tubular member (4), and the joints at open ends are catch joints or they are made by welding, clamping, gluing, screwing, with clips or pins, or through thermocompression bonding.
